# EUROPEAN PATENT APPLICATION

(11) **EP 1 049 314 A1**
(43) Date of publication of application: **02.11.2000**
(21) Application number: 99401013.0
(22) Date of filing: 26.04.1999
(51) Int. Cl.: H04M 15/00

(54) **Warrantor determination device and method for operations related to the use of services by an end-user**

(71) Applicant: ALCATEL, 75008 Paris (FR)
(72) Inventor: Deckers, Gäetan Bernard Christian Jacques J.M., 1652 Alsemberg (BE); Van Ackere, Michel Diane Cyriel, 9100 Sint-Niklaas (BE)
(74) Representative: Narmon, Gisèle Marie Thérèse

(57) **Abstract**

A device and a method for determination of a warrantor to be charged for the use of a service (2M,...,2Q), through and/or by means of a communication network and by a definite end-user (1).

Processing means are used for selecting, according to predetermined rules and conditions, a warrantor (5A,...,5C) to be charged for the use of the service, among warrantors registered in memory means of the determination device, as accountable for an use of the same and/or other services by this end-user.

## Description

The invention relates to a device and method for the determination of a warrantor to be taken into account for the use of a service through and/or by means of a communication network and by a definite end-user.

They are both particularly provided for access control to a service and/or charge allocation for the use of such a service by an end-user in specific conditions according to which the end-user is not always the warrantor having access or to be charged.

As known, the charges incurred by an end-user of a telecommunication network, such as for instance a public telephone network or radiotelephone network, are commonly allocated to a specified subscriber according to a preliminary contract entered by this subscriber with a service provider. Such a contract is for instance entered between a subscriber and a fixed network operator for all the paying calls transmitted to an exchange of the fixed network by means of a telephone line attributed to the subscriber.

There are other known possibilities, such as having a called party being charged after a request, from the calling party to the network operator and/or service provider, and an approval from the called party. According to another well-known possibility, some or all calls to a called party could also be partly free of charges for the calling parties, if a corresponding agreement has been entered by the called party with a service provider for this purpose.

There is also a solution for telecommunication terminals, such as telephone sets, mobiles or computers including a card reader, according to which the charges are allocated to a card subscriber for all paying calls obtained with a telecommunication terminal then equipped with an accreditive card obtained from a service provider.

It has to be remarked that the above mentioned expression 'paying call' is a call where for the subscriber at least partly pays.

However, the known solutions do not always meet the requirements of telecommunication subscriber and/or end-users as regards access to definite services and/or charging of provided services. For instance, there is no possibility of selecting automatically, or on purpose when necessary, a specific subscriber to be charged for a specific call or a specific category of calls, such as for instance for private calls from a company mobile, or calls related to a specific subscriber among several others.

The object of the present invention is to provide a device and a method for the determination of a warrantor to be taken in account for the use, by a definite end-user, of a definite service through and/or by means of a communication network.

Accordingly, it is an object of the invention, to provide a device for determination of a warrantor to be taken into account for the use of a definite service through and/or by means of a communication network and by a definite end-user.

This device comprises processing means for selecting, according to predetermined rules and conditions, a warrantor such as the above mentioned subscriber, to be taken into account for the use of this definite service, among warrantors registered, in memory means of said determination device, as accountable for a use of the same and/or other services by this end-user.

As indicated above, it is also an object of the invention to provide a method for the determination of a warrantor to be taken into account for the use of a definite service, through and/or by means of a communication network, to a definite end-user who is calling.

This method includes the following steps:
- entering by registration means in memory means a pre-registration for each warrantor accountable for a definite service, in relation with a set of characteristic values determined for this service, in order to have this warrantor taken into account when this set of characteristic values is provided for an actual use of the service by the end-user;
- determining an actual set of characteristic values, according to fixed rules and/or conditions, for a service when this service is requested by the end-user;
- determining the warrantor to be accounted for the use of a service defined by an actual set of characteristic values, according to fixed rules and conditions and/or by detection of a corresponding set of characteristic values already stored in said memory means in relation with an accountable warrantor.

Such a method is more particularly intended for access control to at least a definite service for a definite end-user. This access control is guaranteed by an accountable warrantor as registered and/or for allocation, to a registered accountable warrantor, of charges incurred for at least a definite service provided for to at least a definite end-user.

The invention will now be described further with reference to the accompanying drawings, in which:
Figure 1 is a block diagram showing an example of linking scheme between services and a service requesting end-user in a telecommunication network.
Figure 2 is a block diagram illustrating a first arrangement including a warrantor determination device according to the invention in relation with a communication network.
Figure 3 is a block diagram illustrating a second arrangement including a warrantor determination device according to the invention in relation with a communication network
Figure 4 is a block diagram showing the main operational elements of a warrantor determination device.
Figure 5 is a block diagram showing the main functional units of a warrantor determination device.

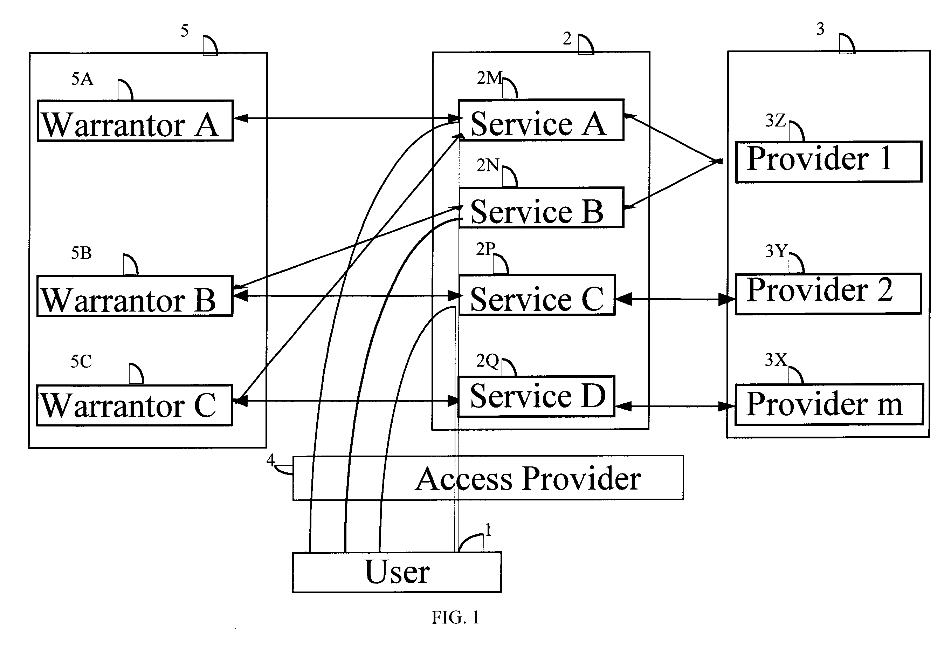

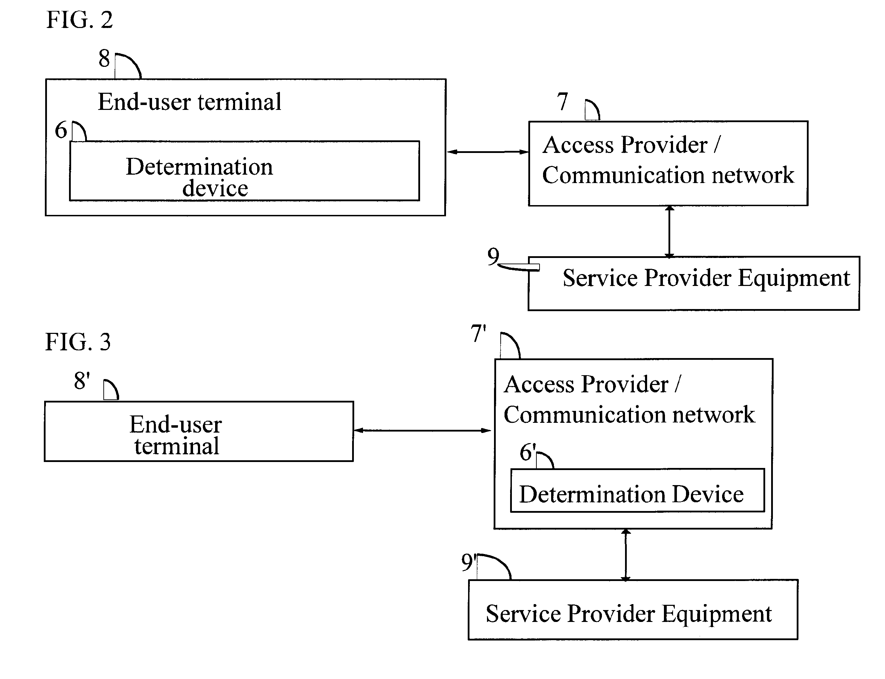

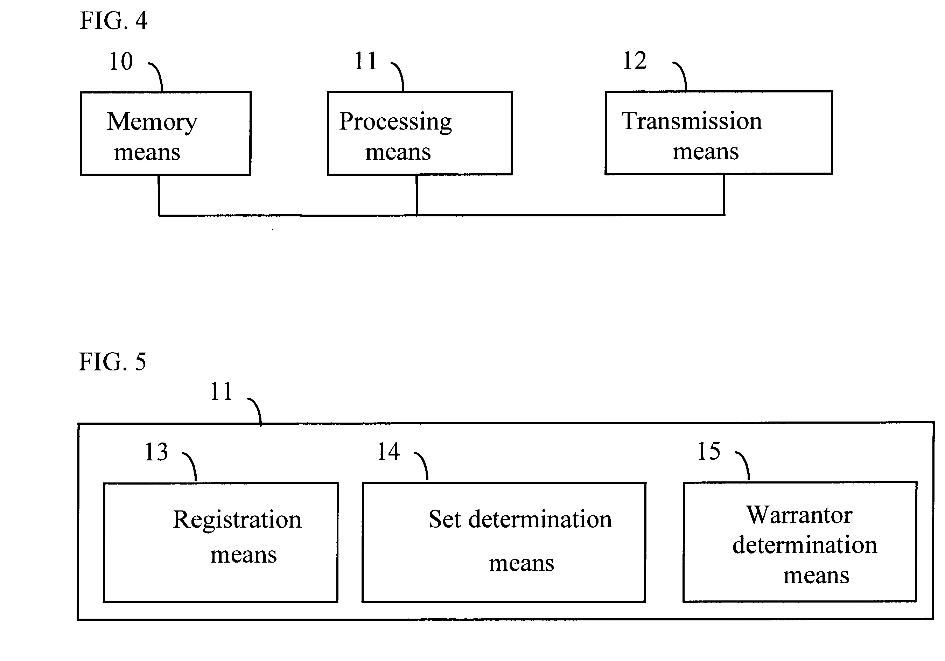

In a commercial telecommunication network, such as for instance a public telephone network or a public mobile radio-telephone network, the cost for every communication and/or service requested is paid by someone if there is a previous charging agreement according to which the calling party or the called party will pay for the communication and/or service. The calling party usually corresponds to an end-user, such as 1 on figure 1, communicating by means of a communication terminal such as for instance a telephone set or a computer linked to a telephone line, or a mobile radio-telephone. Communications originated by end-user 1 through a communication terminal are directed either to one or several other end-users or to a service. Every communication requires that the called party is provided with communication means compatible with the corresponding means of the calling party either directly or through adaptive interfacing, and that an available communication path exists between these parties.

Modern communication networks provide access to a great number of services 2 offered to end-users by service providers 3.

Access to a communication network from an end-user terminal requires an agreement with a specific access provider 4, by which a communication link of a communication network is at least temporarily placed at the user's disposal.

The cost for such a link disposal requires to be paid either by the end-user himself or by someone else, either before the beginning of a communication or later, in relation with a direct or indirect communication contract with the access provider. As known in this field, some communication contracts are directly signed with an access provider by a subscriber for himself and/or for one or several other end-users. In addition to this, access to one or several services, providing for instance access to specific data bases or to specific processes, is usually submitted to additional requirements and particularly to specific charging. In this way, the use of a service can be the use of the communication network itself and moreover the use of a specific service provided via the communication network to the user.

The cost related to the use of a service usually needs to be paid, by the subscriber, sometimes in advance directly or indirectly to the service provider, but more often later in relation with the real exploitation by end-users.

Now, according to the present invention, the use of a service by a definite user is guaranteed by more than one i.e. a plurality of warrantors.

Accordingly, as illustrated on figure 1, a same end-user 1 could have access to several services 2, such as service 2M, 2N, 2P, 2Q respectively provided by different service providers 3Z, 3Y, 3X. Such an access, according to the present invention, is often controlled and reserved to several registered warrantors and also to end-users having a warrantor for them, for instance for end-users belonging to the staff of a warrantor.

Such warrantors do not necessarily have a subscription for the provision of a service to a definite end-user from a service provider. Indeed, such a warrantor is just registered as being accountable for a use of a service by a definite end-user. Being accountable for the use of the service might result in e.g. a payment for the use of the service or the access to the requested service by the end-user. In this last example, the device of the invention determines a warrantor for the end-user but it is the end- user that gets access to the service provider by means of this determined warrantor and by e.g. providing a log-on identification to the service provider.

Access and/or payment of services 2M, 2N, 2P, 2Q for an end-user by means of a same communication unit, such as for instance a same communication link, is guaranteed according to the present invention by different warrantors 5. These warrantors are for instance his company, acting as warrantor 5A, when service 2M is used, another organization acting as warrantor 5B, when services 2N or 2P are used, and the end-user himself, acting as warrantor 5C, when service 2Q is used. Other combinations are also admissible, for instance in accordance with days or time periods each day. Outgoing communications from an end-user can for instance be charged to a company during working hours each week, and otherwise to the end-user himself.

According to the invention, a warrantor determination device 6 is provided for determining the warrantor to be taken into account for the use of definite services by an end-user 1 for instance for allocating the charges incurred by end-user 1 or for allowing and/or controlling access to a service by end-user 1. End-user 1 is linked to a telecommunication network 7 when communicating with and/or by means of at least one service provider. It is reminded here that, as indicated above, communication of an end-user for a specific service often implies an access provider and the service provider, as long as these providers are different.

There are different options for locating such a device in relation with a communication network. According to a first option illustrated on figure 2, the warrantor determination device 6 of the invention is located on an user-end side of the network. It is for instance included in a smart card attributed by a service and/or access provider 9 to end-user 1 for mobile radio-communications and/or for communications from a telecommunication terminal 8 linked by radio or by means of a telecommunication line to the network. Such card needs to be connected to the telecommunication terminal for communication purposes, as usual for instance with mobiles. Alternatively, such a warrantor determination device 6 could also be a part of a circuit included in a terminal, for instance when this terminal is a private telephone set.

According to another option, a warrantor determination device 6' is located in a communication network 7', e.g. exploited by a network operator, as illustrated on figure 3. It is also foreseeable to have a warrantor determination device comprising means on either side of a communication network, i.e. partly in an end-user card and/or telecommunication terminal and/or partly in the communication network or in a provider unit.

In any case and as illustrated on figure 4, a warrantor determination device requires use of memory means 10 for storing information related to at least one end-user in association with several warrantors.

Memory means 10 related to an end-user are for instance included in a card memory, a terminal memory, a communication network memory and/or a provider unit memory. They store information related to this end-user and more specifically allocating information related to each accountable warrantor and to available services in relation with him. All this information needs to be entered with the permission of the warrantor, before use, according to established rules. These rules can widely vary according to the needs of providers, warrantors and/or end-users.

Processing means 11 are also required for processing the stored information in relation with information provided by the end-user and/or a service provider for a specific service in order to select an appropriate warrantor to be taken into account.

As known and for instance, the charging of a specific communication is obtained by means of a charging unit for the account of the service provider. Accordingly, when using the device of the invention for these charging purposes, a transmission of information related to the warrantor to be charged from the warrantor determination device to the provider unit by transmission means 12 is required. These transmission means are linked to the communication network, if the warrantor determination device is not included in it.

Processing means 11 are for instance included at least partly in a card, a terminal, a communication network and/or at least a provider unit. They include at least one software determination module. This module handles more specifically information provided by the end-user and/or by at least one provider in relation with information stored in memory means 10 in relation with the end-user, before full implementation of a communication involving this end-user.

However, a communication with a service provider from an end-user terminal implies an existing pre-registration of at least a first warrantor to be taken into account and for instance to be charged for this service in relation with this end-user.

As shown on figure 5, registration means 13 are provided at the level of a warrantor determination device for entering at least a pre-registration of a first warrantor to be taken into account for at least one service in relation with a specific end-user in memory means.

In a preferred example of realization, information related to an end-user is stored as, possibly pre-organized, sets of characteristics associated to the services available to this end-user. The information is for instance stored under a matrix form, with an indication of a predetermined warrantor selected for each service among the accountable warrantors registered in relation with this said end-user. Such a set includes for instance the called number, the calling time, the total duration of calls allowed for this called number, the location of the calling terminal.

Pre-registration of a default warrantor for an end-user, in addition or among other accountable warrantors registered for this end-user, is a solution when no warrantor for a call could be found. This is for instance the case when an outgoing call from the end-user to a yet unregistered service.

Use of a warrantor determination device according to the invention by an end-user implies a pre-registration in memory means 10 of information related to each warrantor, as soon as they are necessary to the provider for allowing and for instance charging the use of a service.

According to a first example, allocation of charges to registered warrantors in relation with registered services for an end-user are made according to fixed rules in such a way that there is at least one designated warrantor for each registered service and eventually a default warrantor when there is a call to a service still without any registered warrantor. Such registration of a warrantor for the use of a service by a definite end-user is for instance stored in memory means 10 by registration means 13, when a set of characteristics is first stored for this service or is modified, according to the needs.

However such a solution does not fit well, when the selection of a registered warrantor for a service is based on varying rules and for instance when the warrantor selection is a function related to time or is based on the geographical position of the end-user with regards to the communication network. In such cases, storage of warrantor selection rules and/or characteristics in memory means 10 need to be made before any request for service from the end-user to be based on such varying selection rules. The same happens for determining a proper warrantor, when conflicting selection situations could arise in occasions according to which different allocation rules are possible with a same end-user, for instance when a varying scheme of organisation is used for such an end-user.

According to the invention, set determination means 14 are included in a warrantor determination device for a determination of an actual set of characteristic values corresponding to a service for an end-user when there is a call to this service initiated. Generation of such an actual set of characteristic values is for instance triggered by a keying in sequence of an end-user for obtainment of a service by means of a telecommunication terminal into which keyed alphanumerical information are entered. A first determination process is then triggered by comparison between the actual set of characteristic values as derived from the keying sequence and registered sets of characteristic values as yet stored for services in memory means 10 in relation with the end-user.

Warrantor determination means 15 are for instance activated, when a stored set of characteristic values corresponds to the actual set of characteristic values, for determining the warrantor to be charged. As indicated this determination is easily obtained, for instance by simple reading, when there is a registered warrantor directly corresponding to the stored set of characteristics values according to fixed rules. Use of determination means 15 based on a specific algorithm is foreseen as soon as the rules admit some variations as already mentioned above and particularly if the choice made by the end-user could induce conflict to be solved for selection of an appropriate warrantor among several registered warrantors in relation with a service request issued by the end-user. When the selection of a registered warrantor to be taken into account for a service call is obtained, a warrantor identification is sent from processing means 11 to a provider unit before full establishment of the requested communication between the end-user and the service he requests. As easily understood, information transmissions before establishment of a communication between an end-user telecommunication terminal and a service in relation with the selection of a warrantor to be taken into account do not follow exactly the same transmission paths according to the respective positions of the components in differently organised warrantor determination devices. For instance, memory means 10 and processing means 11 are supposed on the side of the end-user with regard to communication network to which they are linked by transmission means 12, in an allocation device as illustrated on figures 2 and 4. Memory means 10 are for instance included with processing means 7 in an end-user smart card to be plugged in a telecommunication terminal linked by transmission means 12 and for instance radio transmission means to communication network. Processing means 11 receive information from a determined provider, through the communication network 7 and transmission means 12, before full communication establishment between the end-user terminal and the requested service as provided by this provider. Warrantor determination means 15 provide a warrantor identification to the provider and for instance to a provider charging unit, before full establishment of the communication and according to information obtained from the end-user and/or from the provider(s). The communication is usually established fully as soon as identification of the warrantor is obtained at the provider level, as usual in this field.

According to a preferred form of realisation, the warrantor determination process as indicated above is automatic, with a determination device according to the invention, as long as a paying call from an end-user terminal for a service corresponds to a call for a registered service as recognised by its specific set of characteristic values. If the actual set provided for the call is not recognized as corresponding to a registered service, an automatic allocation of a warrantor is chosen among the registered warrantors, either by selection of the default warrantor chosen for the end-user or by a specific selecting process. Such a selecting is for instance automatic and based on an hierarchical tree and it ends with the selection of the most appropriate warrantor according to the rules fixed in relation with the needs of the service provider(s) and/or of the warrantors and/or of the end-user. Participation of the end-user to the selection process is also foreseen for instance by means of keyed in replies to vocal or displayed questions transmitted from the allocation device.

While the principles of the invention have been described above in connection with specific apparatus, it is to be clearly understood that this description is made only by way of example and not as a limitation on the scope of the invention, as defined in the appended claims.

## Claims

1. A device for determination of a warrantor to be taken into account for the use of a definite service (2M,..., 2Q), through and/or by means of a communication network and by a definite end-user (1), **characterized** in that it comprises processing means (11) for selecting, according to predetermined rules and conditions, a warrantor (5A, ..., 5C) to be taken into account for the use of this definite service, among warrantors registered, in memory means (10) of said determination device, as accountable for a use of the same and/or other services by this end-user.

2. A device according to claim 1, characterized in that it comprises :
- registration means (13) for entering in said memory means a warrantor pre-registration, for a warrantor to be taken into account for a determined service, in relation with a set of characteristic values determined for this service, in order to have this warrantor taken into account when this set of characteristic values is provided for an actual use of the service by this end-user;
- set determination means (14) for determining an actual set of characteristic values, according to fixed rules and/or conditions, for a service when requested by the end-user ;
- warrantor determination means (15) for determining the warrantor to be taken into account for use of a service defined by an actual set of characteristic values, in accordance with fixed rules and conditions and/or by detection of a corresponding set of characteristic values already stored in said memory means in relation with an accountable warrantor.

3. A device according to claim 1 or 2, characterized in that it is at least partly included in an end-user smart card connected to a communication terminal when in use.

4. A device according to claim 1, 2 or 3, characterized in that it is at least partly included in a communication terminal.

5. A device according to claim 1, 2, 3 or 4, characterized in that it is at least partly included in a communication network.

6. A device according to claim 1, 2, 3, 4 or 5, characterized in that it is at least partly included in a provider unit and provided for different end-users.

7. Method for the determination of a warrantor to be taken into account for the use of a definite service (2), through and/or by means of a communication network (7), by a definite end-user (1), **characterized** in that it includes the following steps :
- entering by registration means (13) in memory means (10) a pre-registration for each warrantor accountable for a definite service, in relation with a set of characteristic values determined for this service, in order to have this warrantor taken into account when this set of characteristic values is provided for an actual use of the service by the end-user;
- determining an actual set of characteristic values, according to fixed rules and/or conditions, for a service when this service is requested by the end-user ;
- determining the warrantor to be accounted for the use of a service defined by an actual set of characteristic values, according to fixed rules and conditions and/or by detection of a corresponding set of characteristic values already stored in said memory means in relation with an accountable warrantor.

8. Method according to claim 7, characterized in that a set of characteristic values includes service characteristic values, use characteristic values and/or user characteristic values.

9. Method according to claim 7 or 8, characterized in that a predefined sequence of defined rules and conditions is applied during set determination and/or warrantor determination for selecting the warrantor to be accounted for a service requested by an end-user

10. Method according to claim 7, 8 or 9, characterized in that it is applied for access control to at least a definite service for a definite end-user on bail out of an accountable warrantor as registered.

11. Method according to claim 7, 8, 9 or 10, characterized in that it is applied for allocating to a registered accountable warrantor charges incurred for at least a definite service provided for to at least a definite end-user.
